# EUROPÄISCHE PATENTSCHRIFT

(11) **EP 2 891 842 B1**
(45) Veröffentlichungstag und Bekanntmachung des Hinweises auf die Patenterteilung: **24.05.2017**
(21) Anmeldenummer: 14003728.4
(22) Anmeldetag: 05.11.2014
(51) Int. Cl.: F21V 14/04, B60R 11/02, B60Q 3/44, B60Q 3/82

(54) **Vorrichtung zur Reflexion von wenigstens einer akustischen und/oder optischen Signalausgabeeinrichtung ausgegebenen akustischen und/oder optischen Signalen in einem Innenraum eines Kraftfahrzeugs**
Device for reflection of acoustic and/or optical signals output by at least one acoustic and/or optical signal output device in the interior of a motor vehicle
Dispositif de réflexion de signaux sonores et/ou visuels émis par au moins un dispositif d'émission de signal sonore et/ou visuel à l'intérieur d'un véhicule automobile

(30) Priorität: 11.12.2013 DE 102013020865
(43) Veröffentlichungstag der Anmeldung: 08.07.2015
(73) Patentinhaber: AUDI AG, 85045 Ingolstadt (DE)
(72) Erfinder: Reuschel, Jens Dietmar, 85053 Ingolstadt (DE); Tovar, Johannes, 85049 Ingolstadt (DE)
(74) Vertreter: Thielmann, Frank

(56) Entgegenhaltungen:
- EP-A2- 1 284 586
- DE-A1- 10 117 525
- DE-A1- 10 259 543
- DE-A1- 19 624 077
- DE-A1-102008 043 113
- DE-A1-102009 018 147
- DE-U1- 8 110 505
- DE-U1- 29 924 600
- JP-A- H04 137 898
- KR-A- 20040 022 756
- US-A1- 2015 086 035

## Beschreibung

Die Erfindung betrifft eine Vorrichtung zur Reflexion von von wenigstens einer akustischen Signalausgabeeinrichtung und/oder optischen Signalausgabeeinrichtung ausgegebenen akustischen und/oder optischen Signalen in einen Innenraum, insbesondere eine Fahrgastzelle, eines Kraftfahrzeugs, umfassend wenigstens ein Reflexionselement zur Reflexion von auf dieses auftreffenden akustischen und/oder optischen Signalen in den Innenraum.

Derartige Vorrichtungen sind aus dem Bereich der Kraftfahrzeugtechnik an und für sich bekannt. Die Vorrichtungen dienen durch die Reflexion von von diesen zugehörigen akustischen und/oder optischen Signalausgabeeinrichtungen ausgegebenen akustischen bzw. optischen Signalen in einen Fahrzeuginnenraum bzw. eine Fahrgastzelle typischerweise einer wenigstens teilweisen Beschallung oder Beleuchtung des Innenraums, d. h. insbesondere der Fahrgastzelle. Hierfür umfassen derartige Vorrichtungen typischerweise ein Reflexionselement zur Reflexion von auf dieses auftreffenden akustischen und/oder optischen Signalen in den Fahrzeuginnenraum. Das Dokument DE10259543 A1 offenbart einen Richtlautsprecher mit einer Schallquelle und einem schwenkbaren Reflektor. DE19624077 A1 weist eine Leseleuchte für ein Kraftfahrzeug mit einem schwenkbaren Reflektor auf. Es ist zweckmäßig, das Reflexionselement bei Nichtgebrauch derart zu verlagern, um es vor dessen Reflexionseigenschaften beeinträchtigenden Beschädigungen und Verschmutzungen zu schützen. Es besteht daher ein Bedarf an einer technisch zuverlässigen bewegbaren Lagerung eines entsprechenden Reflexionselements in einer Gebrauchsstellung und in einer Nichtgebrauchsstellung. Die bewegbare Lagerung sollte für Fahrzeuginsassen dazu optisch anmutend konzipiert sein.

Der Erfindung liegt deshalb die Aufgabe zugrunde, eine verbesserte Vorrichtung zur Reflexion von von wenigstens einer akustischen und/oder optischen Signalausgabeeinrichtung ausgegebenen akustischen und/oder optischen Signalen in einen Innenraum eines Kraftfahrzeugs anzugeben.

Die Aufgabe wird durch eine eingangs genannte Vorrichtung zur Reflexion von von wenigstens einer akustischen und/oder optischen Signalausgabeeinrichtung ausgegebenen akustischen und/oder optischen Signalen in einen Innenraum eines Kraftfahrzeugs gelöst, welche sich dadurch auszeichnet, dass das wenigstens eine Reflexionselement zwischen einer ersten Schwenkstellung und einer zweiten Schwenkstellung schwenkbar bzw. verschwenkbar gelagert ist.

Die erfindungsgemäße Vorrichtung zeichnet sich sonach durch eine besondere Lagerung des dieser zugehörigen Reflexionselements aus. Das Reflexionselement ist erfindungsgemäß nämlich um wenigstens eine Schwenkachse schwenkbar bzw. verschwenkbar gelagert und sonach von einer ersten Schwenkstellung in eine zweite Schwenkstellung bzw. zwischen einer ersten Schwenkstellung und einer zweiten Schwenkstellung verschwenkbar. Die erste Schwenkstellung kann einer Nichtgebrauchsstellung des Reflexionselements, in welcher im in einem Kraftfahrzeug verbauten Zustand der Vorrichtung eine Reflexion von von entsprechenden optischen und/oder akustischen Signalausgabeeinrichtungen ausgegebenen optischen und/oder akustischen Signalen in den Innenraum des Kraftfahrzeugs nicht möglich ist, entsprechen. Die zweite Schwenkstellung kann einer Gebrauchsstellung des Reflexionselements, in welcher im in einem Kraftfahrzeug verbauten Zustand der Vorrichtung eine Reflexion von von entsprechenden optischen und/oder akustischen Signalausgabeeinrichtungen ausgegebenen optischen und/oder akustischen Signalen in den Innenraum des Kraftfahrzeugs möglich ist, entsprechen.

Die über die schwenkbare Lagerung des Reflexionselements realisierbaren Schwenkbewegungen bzw. Schwenkbewegungsbahnen des Reflexionselements können mehrere unterschiedlich gerichtete Schwenkbewegungskomponenten umfassen. Die Schwenkbewegungskomponenten können sich insbesondere darin unterscheiden, dass diese Schwenkbewegungen, d. h. allgemein Drehbewegungen, des Reflexionselements um unterschiedliche Raum- bzw. Schwenkachsen darstellen. So ist es z. B. möglich, dass Reflexionselement derart schwenkbar zu lagern, dass dieses beim Verschwenken einerseits eine bestimmte Schwenkbewegung um eine horizontale Achse und andererseits eine bestimmte Schwenkbewegung um eine vertikale Achse erfährt.

Die schwenkbare Lagerung des Reflexionselements ermöglicht eine technisch zuverlässige bewegbare Lagerung des Reflexionselements zwischen einer ersten Schwenkstellung, welche typischerweise der Nichtgebrauchsstellung des Reflexionselements entspricht, und einer zweiten Schwenkstellung, welche typischerweise der Gebrauchsstellung des Reflexionselements entspricht. Die schwenkbare Lagerung des Reflexionselements ist für Fahrzeuginsassen außerdem optisch anmutend konzipiert. Dies ergibt sich insbesondere dadurch, dass Fahrzeuginsassen die Schwenkbewegungen des Reflexionselements als besondere Inszenierung der Vorrichtung, d. h. insbesondere deren Inbetriebnahme, erleben.

Typischerweise verläuft die Schwenkachse geneigt bzw. schräg bezüglich einer horizontalen Achse bzw. Ebene. Die Schwenkachse steht mit anderen Worten sonach typischerweise geneigt bzw. schräg im Raum. Durch die geneigte bzw. schräge Stellung der Schwenkachse bezüglich einer horizontalen Achse bzw. Ebene ergibt sich insbesondere die optisch besondere Anmutung von Schwenkbewegungen des Reflexionselements. Unter einer horizontalen Achse ist allgemein eine in einer horizontalen Ebene liegende Achse zu verstehen. Eine Referenzierung des Verlaufs der Schwenkachse zu einem Kraftfahrzeug, in welchem die erfindungsgemäße Vorrichtung verbaut ist, kann beispielsweise darin bestehen, dass die Schwenkachse im in einem Kraftfahrzeug verbauten Zustand der erfindungsgemäßen Vorrichtung geneigt bzw. schräg bezüglich einer horizontalen Ebene, in welcher sich beispielsweise der Unterboden des Kraftfahrzeugs befindet, verläuft. Bezogen auf ein Fahrzeugkoordinatensystem verläuft die Schwenkachse sonach geneigt bezüglich einer in x-Richtung (Fahrzeuglängsachse) und y-Richtung (Fahrzeugquerachse) aufgespannten Ebene.

Schwenkbewegungen des Reflexionselements können über einen mit dem Reflexionselement gekoppelten Schwenkantrieb realisiert werden. Dabei ist es möglich, dass das Reflexionselement über wenigstens einen Tragarm mit einem Schwenkantrieb gekoppelt ist, wobei der Tragarm reflexionselementseitig bezogen auf eine Symmetrieachse des Reflexionselements außerzentrisch an dem Reflexionselement ansetzt. Durch die außerzentrische, d. h. bei einem rotationssymmetrisch ausgebildeten Reflexionselement außerhalb einer Symmetrieachse liegende, Anbindung des Tragarms an das Reflexionselement ist im Rahmen von Schwenkbewegungen des Reflexionselements, wie oben beschrieben, zusätzlich eine Schwenkbewegungskomponente um eine vertikale Achse realisierbar, was insbesondere eine besondere optische Anmutung der Schwenkbewegung des Reflexionselements ergibt. Allgemein stellt der Tragarm ein konstruktives Bindeglied zwischen einem Reflexionselement und einem, typischerweise motorischen, Schwenkantrieb dar, so dass der Schwenkantrieb grundsätzlich auch deutlich räumlich beabstandet von dem Reflexionselement angeordnet sein kann.

Der Tragarm kann wenigstens zwei, insbesondere parallel verlaufende, Tragarmabschnitte umfassen, welche über einen, insbesondere senkrecht zu wenigstens einem der Tragarmabschnitte verlaufenden, Verbindungsabschnitt verbunden sind. Durch die unterschiedlich angeordneten, d. h. gegebenenfalls unterschiedlich ausgerichteten bzw. orientierten, Tragarmabschnitte sind wiederum besondere Schwenkbewegungsbahnen des Reflexionselements realisierbar. Ein erster Tragarmabschnitt ist hierbei endseitig an dem Schwenkantrieb angebunden, ein zweiter Tragarmabschnitt ist endseitig an dem Reflexionselement angebunden. Eine bevorzugte Ausführungsform sieht zwei parallel verlaufende Tragarmabschnitte vor, welche über einen, typischerweise rechtwinklig, zwischen diesen verlaufenden Verbindungsabschnitt miteinander verbunden sind. Der Tragarm kann sonach eine gewinkelte Form aufweisen.

Das Reflexionselement kann konstruktiv grundsätzlich beliebig gestaltet sein, wesentlich ist, dass es wenigstens eine Reflexionsfläche zur Reflexion von auf diese auftreffenden akustischen und/oder optischen Signalen, d. h. typischerweise Schall(wellen) und/oder Licht(wellen), aufweist. Gleichwohl sieht eine bevorzugte Ausführungsform vor, dass das Reflexionselement schalenförmig ausgebildet ist. Bei dem Reflexionselement kann es sich sonach um ein rotationssymmetrisches Bauteil handeln, welches eine bestimmte Krümmung bzw. Wölbung aufweist. Die schalenförmige Ausbildung des Reflexionselements verbessert die Reflexion der zu reflektierenden akustischen und/oder optischen Signale in den Innenraum bzw. die Fahrgastzelle des Kraftfahrzeugs.

Das Reflexionselement kann aus einem Licht reflektierenden Material gebildet sein oder, insbesondere im Bereich einer Reflexionsfläche, mit einem solchen Material versehen sein. Alternativ oder ergänzend ist es möglich, dass das Reflexionselement aus einem Licht leitenden Material gebildet ist. Das Reflexionselement kann daher materialbedingt Licht reflektierende bzw. Licht leitende Eigenschaften aufweisen. Die materialmäßig unterschiedlichen Möglichkeiten zur Ausbildung des Reflexionselements bedingen insbesondere für auf dieses auftreffende optische Signale unterschiedliche Reflexionseigenschaften.

Sofern über das Reflexionselement optische Signale, wie insbesondere Licht, in den Innenraum reflektiert werden sollen, ist das Reflexionselement, insbesondere im Bereich einer diesem zugehörigen Reflexionsfläche, aus einem Licht reflektierenden Material zu bilden respektive, insbesondere im Bereich einer diesem zugehörigen Reflexionsfläche, mit einem solchen Licht reflektierenden Material zu versehen, d. h. beispielsweise zu beschichten, zu lackieren etc. Bei einem Licht reflektierenden Material kann es sich beispielsweise um ein Licht reflektierendes Kunststoffmaterial oder Licht reflektierendes metallisches Material, kurz ein Metall, handeln. Die Reflexionsfläche des Reflexionselements kann selbstverständlich, z. B. durch Polieren, derart bearbeitet sein, dass eine bestimmte Lichtreflexion möglich bzw. begünstigt ist.

Die Ausbildung des Reflexionselements aus einem Licht leitenden Material ermöglicht es, optische Signale, d. h. insbesondere Licht(wellen), an einer Stelle in das Reflexionselement einzukoppeln, innerhalb des Reflexionselements auf bestimmte, insbesondere homogene, Weise zu verteilen und gegebenenfalls an einer anderen Stelle wieder aus dem Reflexionselement auszukoppeln. Das Reflexionselement kann daher selbst zumindest abschnittsweise zum Leuchten gebracht werden bzw. selbst zumindest abschnittsweise optische Signale abgeben. Sofern das Reflexionselement eine schalenförmige Gestalt aufweist, kann es sich bei den Lichtauskopplungsflächen insbesondere um die ringartigen Ränder des Reflexionselements handeln. Bei einem Licht leitenden Material kann es sich beispielsweise um Licht leitendes Kunststoffmaterial, wie z. B. PC, PMMA, gegebenenfalls versetzt mit die Licht leitenden bzw. verteilenden Eigenschaften beeinflussenden Partikeln, handeln.

Die oder eine optische und/oder die oder eine akustische Signalausgabeeinrichtung kann in das Reflexionselement integriert sein. Die oder eine optische und/oder die oder eine akustische Signalausgabeeinrichtung kann sonach einen Teil des Reflexionselements bilden und bereits im Rahmen dessen Herstellung mit dem Reflexionselement verbunden werden. Beispielsweise ist es also möglich, entsprechende optische und/oder akustische Signalausgabeeinrichtungen im Rahmen eines Gießverfahrens, insbesondere Spritzgießverfahrens, zur Herstellung des Reflexionselements in das Reflexionselement einzubringen und sonach mit dem das Reflexionselement bildenden Material direkt zu ummanteln. Es handelt sich durch die Integration der optischen und/oder akustischen Signalausgabeeinrichtung(en) in das Reflexionselement um eine besonders Bauraum sparende Ausführungsform der erfindungsgemäßen Vorrichtung. Selbstverständlich ist es auch möglich, die oder eine optische und/oder die oder eine akustische Signalausgabeeinrichtung kraftfahrzeugseitig anzuordnen.

Eine der Vorrichtung zugeordnete oder zugehörige optische Signalausgabeeinrichtung kann insbesondere als ein zur Emission optischer Signale in Form von Licht ausgebildetes Lichtelement, insbesondere als eine Leuchtdiode, kurz LED, ausgebildet sein oder wenigstens ein solches umfassen. Die optische Signalausgabeeinrichtung ist. typischerweise derart ausgebildet, dass sie Licht(wellen) unterschiedlicher Intensität und/oder Wellenlänge und somit Licht unterschiedlicher Leuchtkraft und Färbung emittieren kann.

Eine der Vorrichtung zugeordnete oder zugehörige akustische Signalausgabeeinrichtung kann insbesondere als ein zur Emission akustischer Signale in Form von Schall ausgebildetes Schallelement, insbesondere als Lautsprecher, ausgebildet sein oder wenigstens ein solches umfassen. Die akustische Signalausgabeeinrichtung ist typischerweise derart ausgebildet, dass sie Schall(wellen) unterschiedlicher Amplitude und Frequenz und somit Schall unterschiedlicher Lautstärke und Tonhöhe emittieren kann. Es kann sich bei einer entsprechenden akustischen Signalausgabeeinrichtung beispielsweise um einen Hochtöner oder Mitteltöner handeln.

Die erfindungsgemäße Vorrichtung umfasst eine Steuereinrichtung zur Steuerung des Betriebs einer bzw. der der Vorrichtung zugeordneten oder zugehörigen akustischen und/oder optischen Signalausgabeeinrichtung in Abhängigkeit der Schwenkstellung des Reflexionselements. Über die Steuereinrichtung kann in Abhängigkeit von in dieser hinterlegten Steueralgorithmen sonach eine bestimmte Ansteuerung der akustischen und/oder optischen Signalausgabeeinrichtungen erfolgen und somit eine bestimmte akustische und/oder optische Signalfolge in dem Innenraum des Kraftfahrzeugs erzeugt werden. Der Betrieb der akustischen und/oder optischen Signalausgabeeinrichtung erfolgt dabei in Abhängigkeit von über eine geeignete Sensorik erfassten Schwenkstellungen des Reflexionselements, d. h., dass die akustischen und/oder optischen Signalausgabeeinrichtung grundsätzlich in Abhängigkeit der Schwenkstellung des Reflexionselements aktiviert oder deaktiviert werden kann. Selbstverständlich ist es auch möglich, die von der akustischen und/oder optischen Signalausgabeeinrichtung ausgegebenen akustischen und/oder optischen Signale in Abhängigkeit der Schwenkstellung des Reflexionselements, z. B. hinsichtlich der Intensität, zu variieren. Die Steuereinrichtung kann also z. B. dazu eingerichtet sein, den Betrieb der optischen Signalausgabeeinrichtung, insbesondere die Intensität der ausgegebenen optischen Signale, in Abhängigkeit einer Schwenkbewegung des Reflexionselements von der ersten Schwenkstellung in die zweite Schwenkstellung, und/oder umgekehrt, zu steuern. Denkbar ist es z. B. auch, dass die Steuereinrichtung dazu eingerichtet ist, die akustische Signalausgabeeinrichtung dann in Betrieb zu nehmen, wenn das Reflexionselement in eine einer Gebrauchsstellung entsprechende Schwenkstellung geschwenkt ist.

Die Erfindung betrifft ferner ein Kraftfahrzeug, umfassend wenigstens eine wie vorstehend beschriebene erfindungsgemäße Vorrichtung. Das der Vorrichtung zugehörige Reflexionselement ist dabei typischerweise im Bereich eines Armaturenbretts respektive einer Instrumententafel im Innenraum des Kraftfahrzeugs angeordnet. Das der Vorrichtung zugehörige Reflexionselement kann dabei innerhalb eines Innenverkleidungselements angeordnet sein, welches eine für das Reflexionselement vorgesehenen Aufnahmebereich aufweist

Bezüglich des erfindungsgemäßen Kraftfahrzeugs gelten sämtliche Ausführungen bezüglich der erfindungsgemäßen Vorrichtung analog.

Weitere Vorteile, Merkmale und Einzelheiten der Erfindung ergeben sich aus den im Folgenden beschriebenen Ausführungsbeispielen sowie anhand der Zeichnungen. Dabei zeigen:

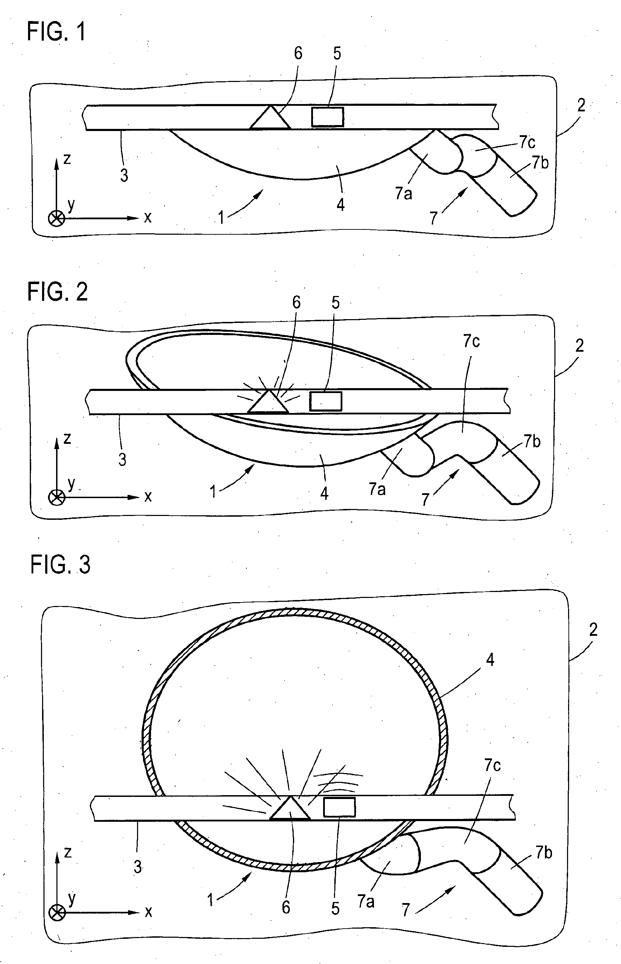

- Fig. 1 - 3: jeweils eine Prinzipdarstellung einer erfindungsgemäßen Vorrichtung im in einem Kraftfahrzeug verbauten Zustand.

Fig. 1 zeigt eine Prinzipdarstellung einer erfindungsgemäßen Vorrichtung 1 zur Reflexion von von wenigstens einer akustischen Signalausgabeeinrichtung 5 und einer optischen Signalausgabeeinrichtung 6 ausgegebenen optischen und akustischen Signalen in einen Innenraum, insbesondere eine Fahrgastzelle, eines Kraftfahrzeugs 2 im in einem Kraftfahrzeug 2 verbauten Zustand. Sämtliche Fig. sind mit einem orthogonalen Fahrzeugkoordinatensystem versehen, wobei die x-Achse der Fahrzeuglängsachse, die y-Achse der Fahrzeugquerachse und die z-Achse einer vertikalen Achse entspricht.

Konkret ist die Vorrichtung 1 im Bereich eines Innenverkleidungselements 3, welches Teil eines kraftfahrzeugseitigen Armaturenbretts (nicht gezeigt) ist oder an das kraftfahrzeugseitige Armaturenbrett anschließt, verbaut. In dem Innenverkleidungselement 3 ist eine an die Abmessungen, d. h. insbesondere den Durchmesser, eines der Vorrichtung 1 zugehörige schwenkbar gelagerten Reflexionselements 4 angepasste, als Aufnahmebereich für das Reflexionselement 4 dienende, Aussparung bzw. Öffnung vorgesehen.

Das der Vorrichtung 1 zugehörige Reflexionselement 4 weist eine schalenförmige und somit rotationssymmetrische Gestalt auf. Die Reflexionsfläche des Reflexionselements 4 ist durch die gewölbten Flächenabschnitte gebildet. Das Reflexionselement 4 ist aus einem Licht leitenden Kunststoffmaterial, wie z. B. mit die Lichtleitung homogenisierenden Nanopartikeln versetztes PMMA, gebildet. Mithin ist es möglich, Licht über Lichteinkopplungsflächen in das Reflexionselement 4 einzubringen, in diesem zu verteilen und über Lichtauskopplungsflächen aus diesem auszukoppeln.

Der Vorrichtung 1 ist eine akustische Signalausgabeeinrichtung 5 in Form eines zur Ausgabe von Schall(wellen) ausgebildeten Schallelements zugeordnet. Bei dem Schallelement handelt es sich um einen Lautsprecher, insbesondere um einen Hochtöner. Die akustische Signalausgabeeinrichtung 5 ist derart ausgebildet, dass sie Schall unterschiedlicher Amplitude und Frequenz und somit Schall unterschiedlicher Lautstärke und Tonhöhe ausgeben kann. Die akustische Signalausgabeeinrichtung 5 ist derart angeordnet, dass die von ihr ausgegebenen akustischen Signale, d. h. Schallwellen, in einer in Fig. 3 gezeigten Schwenkstellung des Reflexionselements 4 auf eine durch das Reflexionselement 4 gebildete Reflexionsfläche treffen und sich im Weiteren innerhalb des bzw. durch den Innenraum des Kraftfahrzeugs 2 verteilen.

Der Vorrichtung 1 ist ferner eine optische Signalausgabeeinrichtung 6 in Form eines zur Ausgabe von Licht(wellen) ausgebildeten Lichtelements zugeordnet. Das Lichtelement umfasst eine Anzahl bzw. ein Array an Leuchtdioden, kurz LEDs. Die optische Signalausgabeeinrichtung 6 ist derart ausgebildet, dass sie Licht unterschiedlicher Intensität und Wellenlänge und somit Licht unterschiedlicher Leuchtkraft und Färbung ausgeben kann. Die optische Signalausgabeeinrichtung 6 ist ebenso derart angeordnet, dass die von ihr ausgegebenen optischen Signale, d. h. Lichtwellen, in einer in Fig. 3 gezeigten Schwenkstellung des Reflexionselements 4 auf eine durch das Reflexionselement 4 gebildete Reflexionsfläche treffen und sich im Weiteren in dem bzw. durch den Innenraum des Kraftfahrzeugs 2 verteilen.

Die oder eine weitere entsprechende optische Signalausgabeeinrichtung 6 kann ebenso in das Reflexionselement 4 integriert sein, was insbesondere dadurch realisiert sein kann, dass sie im Rahmen eines Gießverfahrens, insbesondere Spritzgießverfahrens, zur Herstellung des Reflexionselements 4 in das Reflexionselement 4 eingebracht wurde und sonach mit dem das Reflexionselement 4 bildenden Material direkt zu ummantelt ist. Gleiches gilt grundsätzlich für die oder eine weitere akustische Signalausgabeeinrichtung 5.

Der Betrieb der akustischen wie auch der optischen Signalausgabeeinrichtung 5, 6 ist über eine mit diesen kommunizierende Steuereinrichtung (nicht gezeigt) steuerbar. Die Steuerung des Betriebs der akustischen wie auch der optischen Signalausgabeeinrichtungen 5, 6 erfolgt typischerweise in Abhängigkeit, d. h. unter Berücksichtigung, der über eine geeignete Sensorik erfassten aktuellen Schwenkstellung des Reflexionselements 4. Die akustische und optische Signalausgabeeinrichtung 5, 6 wird also jeweils grundsätzlich in Abhängigkeit der Schwenkstellung des Reflexionselements 4 aktiviert, deaktiviert bzw. hinsichtlich wenigstens eines Betriebsparameters variiert. Über die Steuereinrichtung kann in Abhängigkeit von in dieser hinterlegten Steueralgorithmen sonach eine bestimmte Ansteuerung der akustischen und optischen Signalausgabeeinrichtung 5, 6 erfolgen und somit eine bestimmte akustische und/oder optische Signalfolge in dem Innenraum des Kraftfahrzeugs 2 erzeugt werden.

Die eingangs erwähnte, schwenkbare Lagerung des Reflexionselements 4 ist über einen Tragarm 7 realisiert. Der Tragarm 7 umfasst zwei parallel zueinander verlaufende Tragarmabschnitte 7a, 7b, welche über einen rechtwinklig zu den Tragarmabschnitten 7a, 7b verlaufenden Verbindungsabschnitt 7c miteinander verbunden sind. Der Tragarm 7 weist sonach eine gewinkelte Form auf. Ersichtlich setzt der Tragarmabschnitt 7a außerzentrisch, d. h. außerhalb der Rotationsachse, an dem Reflexionselement 4 an, der Tragarmabschnitt 7b ist mit einem motorischen Schwenkantrieb (nicht gezeigt) gekoppelt.

Wie anhand der Fig. ersichtlich ist, verläuft die durch die räumliche Anordnung und Ausrichtung des Tragarms 7 definierte Schwenkachse, um welche das Reflexionselement 4 schwenkbar ist, geneigt bzw. schräg bezüglich einer horizontalen Achse bzw. Ebene. Eine solche horizontale Ebene kann beispielsweise durch die x- und y-Achse des Fahrzeugkoordinatensystems gegeben sein.

Fig. 1 zeigt das Reflexionselement 4 in einer ersten Schwenkstellung. Die erste Schwenkstellung entspricht einer Nichtgebrauchsstellung des Reflexionselements 4, in welcher eine Reflexion von von entsprechenden akustischen und/oder optischen Signalausgabeeinrichtungen 5, 6 ausgegebenen akustischen und/oder optischen Signalen in den Innenraum des Kraftfahrzeugs 1 nicht möglich ist. Dies begründet sich dadurch, dass das Reflexionselement 4 in der ersten Schwenkstellung nicht aus dem bzw. über das Innenverkleidungselement 3 hinaussteht bzw. hinausragt. Die Reflexionsfläche zeigt in der ersten Schwenkstellung in z-Richtung nach oben.

In der in Fig. 1 gezeigten ersten Schwenkstellung ist typischerweise sowohl die akustische Signalausgabeeinrichtung 5 als auch die optische Signalausgabeeinrichtung 6 deaktiviert. Es werden sonach typischerweise weder akustische noch optische Signale ausgegeben.

Gleichwohl ist es denkbar, insbesondere die optische Signalausgabeeinrichtung 6 bereits in der ersten Schwenkstellung zu aktivieren, so dass in das Reflexionselement 4 Licht eingekoppelt und innerhalb des Reflexionselements 4 in die ringartigen Randbereiche des Reflexionselements 4 geleitet wird, welche sonach Leuchten. Denkbar ist es auch, dass die ringartigen Randbereiche des Reflexionselements 4 Lichtauskopplungsflächen bilden, so dass über diese ein Lichtring ausgegeben oder zumindest gebildet wird (vgl. Fig. 3).

Fig. 2 zeigt das Reflexionselement 4 in einer zwischen der in Fig. 1 gezeigten ersten Schwenkstellung und der in Fig. 3 gezeigten zweiten Schwenkstellung befindlichen Schwenkposition, welche das Reflexionselement 4 durchläuft, wenn es von der ersten Schwenkstellung in die zweite Schwenkstellung, und umgekehrt, verschwenkt wird. Anhand von Fig. 2 ist ersichtlich, dass die besondere schwenkbare Lagerung des Reflexionselements 4 um die durch den besonders ausgerichteten bzw. ausgebildeten Tragarm 7 definierte Schwenkachse nicht allein eine Schwenkbewegung bzw. Schwenkbewegungskomponente um die y-Achse, sondern auch eine Schwenkbewegung bzw. Schwenkbewegungskomponente um die z-Achse umfasst.

Die Steuereinrichtung aktiviert auf Grundlage der erfolgenden Schwenkbewegung des Reflexionselements 4, welche beispielsweise aufgrund einer Aktivierung der Zündung des Kraftfahrzeugs 2 erfolgen kann, und der damit verbundenen Änderung der Schwenkstellung des Reflexionselements 4 die optische Signalausgabeeinrichtung 6, so dass optische Signale in Form von Licht auf die Reflexionsfläche des Reflexionselements 4 gerichtet und von dieser in den Innenraum des Kraftfahrzeugs 2 reflektiert werden. Bedingt durch die Bewegung des Reflexionselements 4 von der ersten Schwenkstellung in die zweite Schwenkstellung wandert ein Lichtkegel durch den Innenraum des Kraftfahrzeugs 2, was einen reizvollen Effekt für Fahrzeuginsassen ergibt. Es ist dabei möglich, dass z. B. die Intensität des optischen Signals, d. h. die Leuchtstärke des Lichts, und/oder die Wellenlänge des optischen Signals, d. h. die Färbung des Lichts, sich in Abhängigkeit der Schwenkstellung des Reflexionselements 4 zusätzlich ändert, so dass z. B. ein dem Verschwenken des Reflexionselements 4 von der ersten Schwenkstellung in die zweite Schwenkstellung synchrones Aufdimmen der optischen Signalausgabeeinrichtung 6 realisierbar ist.

Die Ausgabe optischer Signale kann erfolgen sobald das Reflexionselement 4 eine bestimmte Schwenkstellung im Sinne einer Grenzschwenkstellung erreicht hat, in welcher es derart relativ zu der optischen Signalausgabeeinrichtung 6 positioniert ist, dass von dieser ausgehende optische Signale größtenteils in den Innenraum des Kraftfahrzeugs 2 reflektiert werden.

Fig. 3 zeigt das Reflexionselement 4 in der zweiten Schwenkstellung. Ersichtlich ist das Reflexionselement 4 respektive die diesem zugehörige Reflexionsfläche dabei nicht allein in x-Richtung, sondern auch in y-Richtung in den Innenraum des Kraftfahrzeugs 2 ausgerichtet bzw. orientiert. Dies begründet sich durch die durch die besondere Lagerung des Reflexionselements 4 bedingte besondere Schwenkbewegungsbahn des Reflexionselements 4 im Zuge des Verschwenkens von der ersten Schwenkstellung in die zweite Schwenkstellung, welche sowohl ein Verschwenken um die y-Achse als auch um die z-Achse umfasst.

In der in Fig. 3 gezeigten zweiten Schwenkstellung erfolgt über die akustische Signalausgabeeinrichtung 5 ferner eine Ausgabe akustischer Signale, welche sonach über das Reflexionselement 4 in den Innenraum des Kraftfahrzeugs 2 reflektiert werden. Mit anderen Worten wird die akustische Signalausgabeeinrichtung 5 typischerweise dann in Betrieb genommen, wenn das Reflexionselement 4 in die der Gebrauchsstellung entsprechende zweite Schwenkstellung geschwenkt ist. Sowohl die akustische Signalausgabeeinrichtung 5 als auch die optische Signalausgabeeinrichtung 6 sind in der in Fig. 3 gezeigten Schwenkstellung aktiviert. Es werden sonach sowohl akustische als auch optische Signale ausgegeben.

Fig. 3 zeigt ferner, dass die ringartigen Randbereiche des Reflexionselements 4, wie erwähnt, Lichtauskopplungsflächen bilden, so dass über diese ein Lichtring ausgegeben oder zumindest gebildet wird. Die Lichtauskopplungsflächen sind durch die Schraffur des ringartigen Randbereichs des Reflexionselements 4 angedeutet.

Die erfindungsgemäße Vorrichtung 1 ermöglicht sonach eine technisch zuverlässige Überführung eines Reflexionselements 4 von einer Nichtgebrauchsstellung (vgl. Fig. 1) in eine Gebrauchsstellung (vgl. Fig. 3), und umgekehrt, über.ein Verschwenken des Reflexionselements 4 um eine schräg durch den Innenraum des Kraftfahrzeugs 2 verlaufende Schwenkachse. Gleichermaßen ist durch die besondere Schwenkbewegung des Reflexionselements 4, welche durch eine entsprechende Steuerung des Betriebs der akustischen und optischen Signalausgabeeinrichtungen 5, 6 konzertiert begleitet wird, eine für Fahrzeuginsassen beeindruckende Inszenierung der Vorrichtung 1 respektive einer mit dieser gekoppelten kraftfahrzeugseitigen Multimediaeinrichtung gegeben.

## Patentansprüche

1. Vorrichtung (1) zur Reflexion von von wenigstens einer akustischen Signalausgabeeinrichtung (5) und/oder optischen Signalausgabeeinrichtung (6) ausgegebenen akustischen und/oder optischen Signalen in einen Innenraum, insbesondere eine Fahrgastzelle, eines Kraftfahrzeugs (2), umfassend wenigstens ein Reflexionselement (4) zur Reflexion von auf dieses auftreffenden akustischen und/oder optischen Signalen in den Innenraum, wobei das wenigstens eine Reflexionselement (4) zwischen einer ersten Schwenkstellung und einer zweiten Schwenkstellung schwenkbar um wenigstens eine Schwenkachse gelagert ist, wobei
der Vorrichtung (1) eine akustische Signalausgabeeinrichtung (5) zugehörig oder zugeordnet ist, welche akustische Signalausgabeeinrichtung (5) als ein zur Emission akustischer Signale in Form von Schall ausgebildetes Schallelement, insbesondere als Lautsprecher, ausgebildet ist oder wenigstens ein solches umfasst, und/oder
der Vorrichtung (1) eine optische Signalausgabeeinrichtung (6) zugehörig oder zugeordnet ist, welche optische Signalausgabeeinrichtung (6) als ein zur Emission optischer Signale in Form von Licht ausgebildetes Lichtelement, insbesondere als Leuchtdiode, ausgebildet ist oder wenigstens ein solches umfasst,
**gekennzeichnet durch**
eine Steuereinrichtung, welche zur Steuerung des Betriebs der akustischen Signalausgabeeinrichtung (5) und/oder der optischen Signalausgabeeinrichtung (6) in Abhängigkeit der Schwenkstellung des Reflexionselements (4) eingerichtet ist.

2. Vorrichtung nach Anspruch 1,
**dadurch gekennzeichnet,**
**dass** die Schwenkachse schräg bezüglich einer horizontalen Achse verläuft.

3. Vorrichtung nach Anspruch 1 oder 2,
**dadurch gekennzeichnet,**
**dass** das Reflexionselement (4) über wenigstens einen Tragarm (7) mit einem Schwenkantrieb gekoppelt ist, wobei der Tragarm (7) reflexionselementseitig bezogen auf eine Symmetrieachse des Reflexionselements (4) außerzentrisch an dem Reflexionselement (4) ansetzt.

4. Vorrichtung nach Anspruch 3,
**dadurch gekennzeichnet,**
**dass** der Tragarm (7) wenigstens zwei, insbesondere parallel verlaufende, Tragarmabschnitte (7a, 7b) umfasst, welche über einen, insbesondere senkrecht zu wenigstens einem der Tragarmabschnitte (7a, 7b) verlaufenden, Verbindungsabschnitt (7c) verbunden sind.

5. Vorrichtung nach einem der vorangehenden Ansprüche,
**dadurch gekennzeichnet,**
**dass** das Reflexionselement (4) schalenförmig ausgebildet ist.

6. Vorrichtung nach einem der vorangehenden Ansprüche,
**dadurch gekennzeichnet,**
**dass** das Reflexionselement (4) aus einem Licht reflektierenden Material gebildet ist oder, insbesondere im Bereich einer Reflexionsfläche, mit einem solchen Material versehen ist und/oder aus einem Licht leitenden Material gebildet ist.

7. Vorrichtung nach einem der vorangehenden Ansprüche,
**dadurch gekennzeichnet,**
**dass** eine akustische Signalausgabeeinrichtung (5) und/oder eine optische Signalausgabeeinrichtung (6) in das Reflexionselement (4) integriert ist bzw. sind.

8. Vorrichtung nach einem der vorangehenden Ansprüche,
**dadurch gekennzeichnet,**
**dass** die Steuereinrichtung dazu eingerichtet ist, den Betrieb der optischen Signalausgabeeinrichtung (6), insbesondere die Intensität der ausgegebenen optischen Signale, in Abhängigkeit einer Schwenkbewegung des Reflexionselements (4) von der ersten Schwenkstellung in die zweite Schwenkstellung, und/oder umgekehrt, zu steuern.

9. Vorrichtung nach einem der vorangehenden Ansprüche,
**dadurch gekennzeichnet,**
**dass** die Steuereinrichtung dazu eingerichtet ist, die Leuchtstärke des Lichts und/oder die Wellenlänge des optischen Signals in Abhängigkeit der Schwenkstellung zu ändern, insbesondere ein einem Aufschwenken des Reflexionselements (4) synchrones Aufdimmen der optischen Signalausgabeeinrichtung (6) zu realisieren.

10. Vorrichtung nach einem der vorangehenden Ansprüche,
**dadurch gekennzeichnet,**
**dass** die Steuereinrichtung dazu eingerichtet ist, die akustische Signalausgabeeinrichtung (5) in Betrieb zu nehmen, wenn das Reflexionselement (4) in eine einer Gebrauchsstellung entsprechende Schwenkstellung geschwenkt ist.

11. Kraftfahrzeug (2), umfassend wenigstens eine Vorrichtung (1) nach einem der vorangehenden Ansprüche.

## Claims

1. Device (1) for reflection of acoustic and/or optical signals output by at least one acoustic signal output unit (5) and/or optical signal output unit (6) in the interior, in particular a passenger compartment, of a motor vehicle (2), comprising at least one reflection element (4) for reflecting acoustic and/or optical signals in the interior which are incident thereon, wherein the at least one reflection element (4) is mounted pivotable between a first pivot position and a second pivot position about at least one pivot axis, wherein
an acoustic signal output unit (5) is assigned to or associated with the device (1), which acoustic signal output unit (5) is formed as a sound element formed for emitting acoustic signals in the form of sound, in particular a loudspeaker, or comprises at least one such sound element, and/or
an optical signal output unit (6) is assigned to or associated with the device (1), which optical signal output unit (6) is formed as a light element formed for emitting optical signals in the form of light, in particular a light diode, or comprises at least one such light element,
**characterized by**
a control unit that is configured to control the operation of the acoustic signal output unit (5) and/or the optical signal output unit (6) depending on the pivot position of the reflection element (4).

2. Device according to claim 1,
**characterized in that**
the pivot axis is inclined with respect to a horizontal axis.

3. Device according to claim 1 or 2,
**characterized in that**
the reflection element (4) is coupled to a pivot drive via at least one support arm (7), wherein the reflection-element-side of the support arm (7) is positioned on the reflection element (4), off-centre with respect to an axis of symmetry of the reflection element (4).

4. Device according to claim 3,
**characterized in that**
the support arm (7) comprises at least two support arm sections (7a, 7b), extending in particular in parallel, which are connected via a connection section (7c) which extends in particular perpendicular to at least one of the support arm sections (7a, 7b).

5. Device according to one of the preceding claims,
**characterized in that**
the reflection element (4) is formed to be cup-shaped.

6. Device according to one of the preceding claims,
**characterized in that**
the reflection element (4) is formed from a light-reflecting material or, in particular in the region of a reflection surface, is provided with such a material and/or is formed from a light-conducting material.

7. Device according to one of the preceding claims,
**characterized in that**
an acoustic signal output unit (5) and/or an optical signal output unit (6) is or are integrated into the reflection element (4).

8. Device according to one of the preceding claims,
**characterized in that**
the control unit is configured to control the operation of the signal output unit (6), in particular the intensity of the optical signal that is output, depending on a pivot motion of the reflection element (4) from the first pivot position into the second pivot position, and/or vice versa.

9. Device according to one of the preceding claims,
**characterized in that**
the control unit is configured to alter the luminous intensity of the light and/or the wavelength of the optical signal depending on the pivot position, in particular to produce a dimming of the optical signal output unit (6) synchronous with the pivoting out of the reflection element (4).

10. Device according to one of the preceding claims,
**characterized in that**
the control unit is configured to set in operation the acoustic signal output unit (5) if the reflection element (4) is pivoted into a pivot position corresponding to a position of use.

11. Motor vehicle (2), comprising at least one device (1) according to one of the preceding claims.

## Revendications

1. Dispositif (1) pour la réflexion de signaux acoustiques et/ou optiques émis par au moins un dispositif d'émission de signaux acoustiques (5) et/ou un dispositif d'émission de signaux optiques (6) dans un espace intérieur, en particulier un compartiment passagers, d'un véhicule automobile (2) comprenant au moins un élément de réflexion (4) pour la réflexion de signaux acoustiques et/ou optiques rencontrant celui-ci dans l'espace intérieur, dans lequel le au moins un élément de réflexion (4) est monté de manière à pouvoir pivoter entre une première position de pivotement et une seconde position de pivotement autour d'au moins un axe pivot, dans lequel :
au dispositif (1) appartient ou est affecté un dispositif d'émission de signaux acoustiques (5), lequel dispositif d'émission de signaux acoustiques est conçu en élément acoustique conçu pour l'émission de signaux acoustiques sous la forme d'un son, en particulier sous la forme d'un haut-parleur, ou au moins en comprend un, et/ou
au dispositif (1) appartient ou est affecté un dispositif d'émission de signaux optiques (6), lequel dispositif d'émission de signaux optiques (6) est conçu sous la forme d'un élément lumineux conçu pour l'émission de signaux optiques sous la forme de lumière, en particulier sous la forme d'une diode luminescente, ou au moins en comprend un,
**caractérisé par** :
un dispositif de commande est ajusté pour commander le fonctionnement du dispositif d'émission de signaux acoustiques (5) et/ou du dispositif d'émission de signaux optiques (6) en fonction de la position de pivotement de l'élément de réflexion (4).

2. Dispositif selon la revendication 1,
**caractérisé en ce que** :
l'axe pivot s'étend en oblique par rapport à un axe horizontal.

3. Dispositif selon la revendication 1 ou 2,
**caractérisé en ce que** :
l'élément de réflexion (4) est couplé à un mécanisme de pivotement via au moins un bras porteur (7), dans lequel le bras porteur (7) est disposé côté élément de réflexion par rapport à un axe de symétrie de l'élément de réflexion (4) de manière excentrée sur l'élément de réflexion (4).

4. Dispositif selon la revendication 3,
**caractérisé en ce que** :
le bras porteur (7) comprend au moins deux sections de bras porteur (7a, 7b) s'étendant en particulier parallèlement, qui sont reliées via une section de liaison (7c) s'étendant en particulier perpendiculairement à au moins l'une des sections de bras porteur (7a, 7b).

5. Dispositif selon l'une quelconque des revendications précédentes,
**caractérisé en ce que** :
l'élément de réflexion (4) présente une forme de cuvette.

6. Dispositif selon l'une quelconque des revendications précédentes,
**caractérisé en ce que** :
l'élément de réflexion (4) est formé d'un matériau réfléchissant la lumière ou est pourvu d'un tel matériau en particulier dans la zone d'une surface de réflexion et/ou est formé d'un matériau photoconducteur.

7. Dispositif selon l'une quelconque des revendications précédentes,
**caractérisé en ce que** :
un dispositif d'émission de signaux acoustiques (5) et/ou un dispositif d'émission de signaux optiques (6) est ou sont intégrés à l'élément de réflexion (4).

8. Dispositif selon l'une quelconque des revendications précédentes,
**caractérisé en ce que** :
le dispositif de commande est ajusté de manière à commander le fonctionnement du dispositif d'émission de signaux optiques (6), en particulier l'intensité des signaux optiques émis, en fonction d'un mouvement pivotant de l'élément de réflexion (4) de la première position de pivotement à la seconde position de pivotement et/ou vice versa.

9. Dispositif selon l'une quelconque des revendications précédentes,
**caractérisé en ce que** :
le dispositif de commande est ajusté de manière à modifier l'intensité lumineuse de la lumière et/ou la longueur d'onde du signal optique en fonction de la position de pivotement, en particulier de manière à assurer une augmentation de l'intensité lumineuse du dispositif d'émission de signaux optiques (6) synchrone à un pivotement de l'élément de réflexion (4).

10. Dispositif selon l'une quelconque des revendications précédentes,
**caractérisé en ce que** :
le dispositif de commande est ajusté de manière à mettre en marche le dispositif d'émission de signaux acoustiques (5) lorsque l'élément de réflexion (4) est soumis à un pivotement dans une position de pivotement correspondant à une position d'utilisation.

11. Véhicule automobile (2) comprenant au moins un dispositif (1) selon l'une quelconque des revendications précédentes.
